# EUROPÄISCHE PATENTSCHRIFT

(11) **EP 0 982 213 B1**
(45) Veröffentlichungstag und Bekanntmachung des Hinweises auf die Patenterteilung: **22.10.2003**
(21) Anmeldenummer: 99116305.6
(22) Anmeldetag: 19.08.1999
(51) Int. Cl.: B61D 17/18, B60R 13/08

(54) **Schalldämmendes Fussbodenelement für Fahrzeuge, insbesondere Schienenfahrzeuge**
Sound-proofing floor element for vehicles, especially railway vehicles
Elément de sol insonorisant pour véhicules, notamment véhicules ferroviaires

(30) Priorität: 25.08.1998 DE 19838496
(43) Veröffentlichungstag der Anmeldung: 01.03.2000
(73) Patentinhaber: ALSTOM LHB GmbH, 38239 Salzgitter (DE)
(72) Erfinder: Eichmann, Peter, Dipl.-Ing., 34289 Zierenberg (DE); Mielisch, Joachim, Dipl.-Ing., 38106 Braunschweig (DE); Thofern, Peter, 38228 Salzgitter (DE); Hohenstein, Michael, 38226 Salzgitter (DE)

(56) Entgegenhaltungen:
- WO-A-92/09468
- DE-U- 9 410 587
- REVUE GENERALE DES CHEMINS DE FER, Bd. 94, Nr. 5, Mai 1975 (1975-05), Seiten 307-308, XP002124778

## Beschreibung

Die Erfindung betrifft ein schalldämmendes Fußbodenelement für Fahrzeuge, insbesondere Schienenfahrzeuge nach dem Oberbegriff des Anspruchs 1.

Ein derartiger Fußboden aus Fußbodenplatten ist aus der DE-29 10 755 A1 bekannt. Bei diesem Fußboden ist auf der Oberseite eines wellblechförmigen Fußbodenträgers ein Mittel zur Körperschalldämmung aufgespritzt. An der Unterseite der mit einem begehbarem Fußbodenbelag abgedeckten Trägerplatte ist ein Mittel zur Luftschalldämmung befestigt. Des weiteren sind gitterartig ausgeführte, schalldämmende Abstandselemente aus Hartschaum vorgesehen, die jeweils durch Kleben einerseits mit dem Mittel zur Körperschalldämmung am Fußbodenträger und andererseits mit dem Mittel zur Luftschalldämmung an der Trägerplatte befestigt sind. In den Freiräumen innerhalb der Fußbodenausbildung ist zur Luftschalldämmung Glaswolle eingelegt. Als nachteilig und unwirtschaftlich erweisen sich die aufwendigen Beschichtungen des Fußbodenträgers und der Trägerplatten.

Aus der DE 20 45 277 C3 ist ein schalldämmender Fahrzeugfußboden bekannt, dessen den begehbarer Fußbodenbelag tragende Trägerplatte über daran befestigte Tragelemente auf einem Fußbodenträger aus Wellblech abgestützt ist. Die Tragelemente liegen mit einem konischen Ende in den eine elastische Schicht aufweisenden Sicken des Wellbleches, wobei zwischen den Bodenflächen der Tragelemente und der elastischen Schicht ein Luftzwischenraum verbleibt. Weiter enthält der Fußboden körper- und luftschalldämmende Werkstoffe und an der Oberseite der Trägerplatte einen elastischen Fußbodenbelag, der an seinen Ränder dicht mit dem Wagenkasten verbunden ist. Bei dieser Bauart ist in Vertikalrichtung keine kraftschlüssige Verbindung der Trägerplatt mit dem wagenfesten Fußbodenträger gegeben, so daß die Trägerplatte und darauf angeordnete Bauteile wie Sitze und Aggregate beim Anfahr- und Bremsvorgang Kippmomenten unterworfen sind. Daraus resultierte eine Beeinträchtigung des Fahrkomforts und es besteht mit der Zeit die Gefahr eines Bruches der Trägerplatte und des Fußbodenbelags, was auch unter dem Sicherheitsaspekt für die Fahrgäste die Unfallgefahr erhöht.

Der Erfindung liegt die Aufgabe zugrunde ein wirtschaftlich herzustellendes und zu montierendes Fußbodenelement mit hoher Schalldämmung zu gestalten, das einen hohen Vorfertigungsgrad für den Fußboden ermöglicht.

Diese Aufgabe wird durch das im Anspruch 1 gekennzeichnete Fußbodenelement gelöst.

Zweckmäßige Weiterbildungen sind in den Unteransprüchen 2 bis 11 angegeben.

Durch den Ersatz des schweren Wellblechbodens herkömmlicher Ausbildungen durch ein ebenes Blech kann eine relativ leichte Fußbodenausbildung für Leichtbaufahrzeuge geschaffen werden, die insbesondere wegen der direkten Verbindung der Trägerplatte mit dem Abschlußblech über die aus köperschalldämmendem Werkstoff bestehenden Tragelemente relativ flach baut. Es ist nunmehr kein geschlossenes Untergestell, insbesondere mit Wellblechboden mehr erforderlich, da die erfindungsgemäßen Fußbodenelemente den Abschluß nach unten selbst aufweisen.

Durch die Ausbildung als Tragstreifen ist einerseits eine belastbare großflächige Abstützung der Trägerplatte gegeben und andererseits wird der seitliche Austritt von Luftschall verhindern bzw. gemindert.

Durch die Fügetechnik mittels Kleben verringert sich der Montage- und Fügeaufwand im Hinblick auf die Fügealtemative durch Schweißen. insbesondere entfällt das Problem des Schweißverzuges und die daraus resultierende Arbeit des Nachrichtens.

Durch die Anbringung von Abstandshaltern zwischen Dämmstoff und Abschlußblech wird verhindert, daß der Dämmstoff durchhängt und es wird sichergestellt, daß der akkustisch wichtige Luftspalt offengehalten wird.

Mit der Ausbildung der Tragelemente / Tragstreifen aus dem Werkstoff mit der Bezeichnung Sylomer findet ein Werkstoff mit der Eigenschaft einer besonders guten Körperschalldämmung bei ausreichender Tragfähigkeit bei der Erfindung Verwendung.

Durch Verbindung des Fußbodenelementes mit dem Rohbau mittels einer Klebeverbindung ist eine wirtschaftliche und einfache aber ausreichend feste Fügeverbindung aufgezeigt. Die Klebeverbindungen werden vorteilhaft mittels eines Polyurethanklebers (PU-Klebers) vorgenommen.

Die Erfindung ist nachfolgend anhand eines Ausführungsbeispiels mit Bezug auf die Zeichnung näher erläutert.

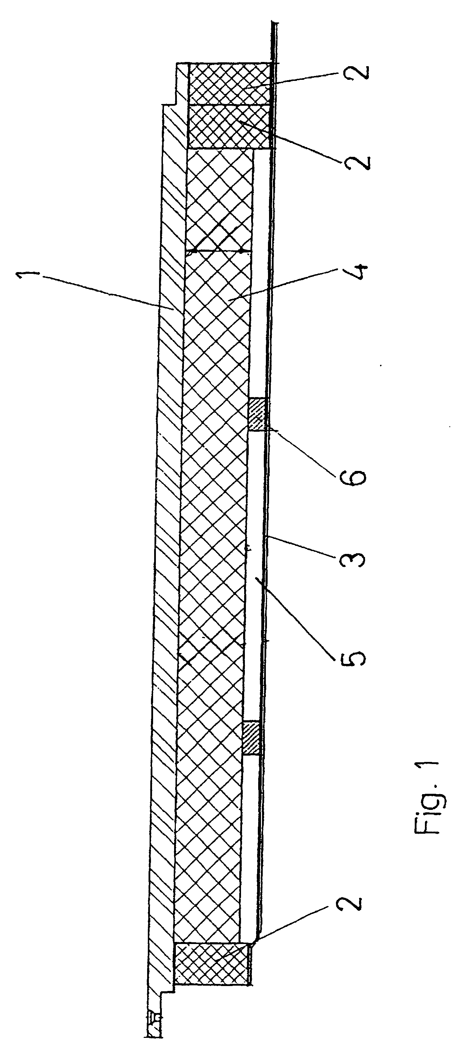

Es zeigt
- Fig. 1: einen Querschnitt durch das Fußbodenelement.

Ein schalldämmendes Fußbodenelement für Fahrzeuge, insbesondere Schienenfahrzeuge weist an seiner Oberseite einen begehbaren Fußbodenbelag auf, der mit einer Trägerplatte 1 verbunden ist. Die Trägerplatte 1 ist über eine körperschalldämmende Trageineinrichtung mit Tragelemente 2 zum unteren Abschlußblech 3 auf Abstand gehalten. Der dadurch gebildete Zwischenraum ist weitgehend mit Dämmstoff 4 zur Luftschalldämmung ausgefüllt, der zwischen den Tragelementen 2 an der Unterseite der Trägerplatte 1 befestigt ist, wobei zwischen der Unterseite der Schicht aus Dämmstoff 4 und dem Abschlußblech 3 ein Luftraum 5 verbleibt, der durch am Abschlußblech 3 befestigte Abstandhalter 6 gewährleistet ist. Diese verhindern, daß der Dämmstoff 4 durchhängt und den akkustisch wichtigen Luftspalt versperrt.

Die Tragelemente 2 sind aus körperschalldämmendem Werkstoff, beispielsweise dem Werkstoff Sylomer, hergestellt und unmittelbar zwischen der Trägerplatte 1 und dem Abschlußblech 3 angeordnet. Dabei sind die Tragelemente 2 vorteilhaft als Tragstreifen ausgebildet, die das Fußbodenelement seitlich mindestens bereichsweise einfassen. Die Tragelemente / Tragstreifen 2 sind mit der Unterseite der Trägerplatte 1 und der Oberseite des Abschlußbleches 3 vorteilhaft mittels einer Klebeverbindung verbunden.

Das Abschlußblech 3 ist als weitgehend ebenes Flächenelement ausgebildet und besteht vorzugsweise aus einem Niro-Stahl.

Die Abstandshalter 6 bestehen vorzugsweise aus elastischem Werkstoff, insbesondere Gummi.

Der an der Unterseite der Trägerplatte 1 befestigte Dämmstoff 4 ist vorzugsweise über einen Klebeverbindung mit dieser verbunden.

Der Dämmstoff 4 besteht in bekannter Weise aus Mineral- oder Glaswolle.

Die Fußbodenelemente sind mit dem Fahrzeugrohbau - weitgehend schwingungs-und schalltechnisch entkoppelt - mittels einer Klebeverbindung verbunden.

Die Klebeverbindungen werden vorzugsweise mit einem Polyurethankleber (PU-Kleber) oder einem anderen geeigneten Klebstoff durchgeführt.

Die Trägerplatte 1 besteht vorzugsweise in bekannter Weise aus Schichtholz (Sperrholz).

### Bezugsziffern

- 1: Trägerplatte
- 2: Tragelement
- 3: Abschlußblech
- 4: Dämmstoff
- 5: Luftraum
- 6: Abstandshalter

## Patentansprüche

1. Schalldämmendes Fußbodenelement für Fahrzeuge, insbesondere Schienenfahrzeuge, das an seiner Oberseite einen begehbaren Fußbodenbelag aufweist, der mit einer Trägerplatte verbunden ist, welche über eine körperschalldämmende Trägereinrichtung mit Tragelementen zum unteren Abschlußblech auf Abstand gehalten ist, wobei der gebildete Zwischenraum weitgehend mit Dämmstoff zur Luftschalldämmung ausgefüllt ist, **dadurch gekennzeichnet, daß** die Tragelemente (2) selbst aus körperschalldämmendem Material bestehen, und unmittelbar zwischen Trägerplatte (1) und Abschlußblech (3) angeordnet und mit diesen verbunden sind, daß das Abschlußblech (3) als weitgehend ebenes Flächenelemente ausgebildet ist, daß zwischen den Tragelementen (2) der Dämmstoff (4) an der Unterseite der Trägerplatte (1) befestigt ist und daß zwischen der Unterseite der Schicht aus Dämmstoff (4) und dem Abschlußblech (3) ein Luftraum (5) ausgebildet ist.

2. Schalldämmendes Fußbodenelement nach Anspruch 1, **dadurch gekennzeichent,** daß die Tragelemente (2) als Tragstreifen ausgebildet sind, die das Fußbodenelement seitlich mindestens bereichsweise einfassen.

3. Schalldämmendes Fußbodenelement nach Anspruch 1 oder 2, **dadurch gekennzeichnet, daß** die Tragelemente / Tragstreifen (2) mit der Unterseite der Trägerplatte (1) und der Oberseite des Abschlußbleches (3) mittels Klebeverbindung verbunden sind.

4. Schalldämmendes Fußbodenelement nach einem der vorhergehenden Ansprüche 1 bis 3, **dadurch gekennzeichnet, daß** der Zwischenraum (5) zwischen der Unterseite der Schicht aus Dämmstoff (4) und dem Abschlußblech (3) durch Abstandshalter (6) sichergestellt ist.

5. Schalldämmendes Fußbodenelement nach Anspruch 4, **dadurch gekennzeichnet, daß** die Abstandshalter (6) aus elastischem Werkstoff, insbesondere Gummi bestehen.

6. Schalldämmendes Fußbodenelement nach einem der vorhergehenden Ansprüche 1 bis 5, **dadurch gekennzeichnet, daß** die Schicht aus Dämmstoff (4) an der Unterseite der Trägerplatte (1) mittels einer Klebeverbindung befestigt ist.

7. Schalldämmendes Fußbodenelement nach einem der vorhergehenden Ansprüche 1 bis 6, **dadurch gekennzeichnet, daß** die Tragelemente / Tragstreifen (2) aus dem Werkstoff Sylomer bestehen.

8. Schalldämmendes Fußbodenelement nach einem der vorhergehenden Ansprüche 1 bis 7, **dadurch gekennzeichnet, daß** der Dämmstoff (4) aus Mineralwolle besteht.

9. Schalldämmendes Fußbodenelement nach einem der vorhergehenden Ansprüche 1 bis 8, **dadurch gekennzeichnet, daß** das Fußbodenelement mit dem Fahrzeugrohbau mittels einer Klebeverbindung verbunden ist.

10. Schalldämmendes Fußbodenelement nach einem der vorhergehenden Ansprüche 1 bis 9, **dadurch gekennzeichnet, daß** die Klebeverbindungen vorzugsweise mittels eines Polyurethanklebers (PU-Klebers) erfolgen.

11. Schalldämmendes Fußbodenelement nach einem der vorhergehenden Ansprüche 1 bis 10, **dadurch gekennzeichnet, daß** die Trägerplatte (1) aus Schichtholz besteht.

## Claims

1. Sound-insulating floor element for vehicles, in particular rail vehicles, which on its upper side exhibits a floor covering which can be walked on and which is joined to a carrier panel which is held a distance from the lower blanking plate by means of a structure-borne sound-insulating carrier arrangement with supporting elements, the interspace formed being largely filled with insulating material for airborne sound-insulation, **characterised in that** the supporting elements (2) themselves are made of structure-borne sound-insulating material, and arranged directly between the carrier panel (1) and the blanking plate (3) and joined to these, **in that** the blanking plate (3) takes the form of a largely flat areal element, **in that** the insulating material (4) is fastened to the underside of the carrier panel (1) between the supporting elements (2) and **in that** an air space (5) is formed between the underside of the layer of insulating material (4) and the blanking plate (3).

2. Sound-insulating floor element according to claim 1, **characterised in that** the supporting elements (2) take the form of supporting strips which frame the floor element laterally at least in areas.

3. Sound-insulating floor element according to claim 1 or 2, **characterised in that** the supporting elements/supporting strips (2) are joined to the underside of the carrier panel (1) and the upper side of the blanking plate (3) by means of glued joints.

4. Sound-insulating floor element according to one of the preceding claims 1 to 3, **characterised in that** the interspace (5) between the underside of the layer of insulating material (4) and the blanking plate (3) is guaranteed by spacers (6).

5. Sound-insulating floor element according to claim 4, **characterised in that** the spacers (6) are made of elastic material, in particular rubber.

6. Sound-insulating floor element according to one of the preceding claims 1 to 5, **characterised in that** the layer of insulating material (4) is fastened to the underside of the carrier panel (1) by means of a glued joint.

7. Sound-insulating floor element according to one of the preceding claims 1 to 6, **characterised in that** the supporting elements/supporting strips (2) are made of the material Sylomer.

8. Sound-insulating floor element according to one of the preceding claims 1 to 7, **characterised in that** the insulating material (4) consists of mineral wool.

9. Sound-insulating floor element according to one of the preceding claims 1 to 8, **characterised in that** the floor element is joined to the vehicle body structure by means of a glued joint.

10. Sound-insulating floor element according to one of the preceding claims 1 to 9, **characterised in that** the glued joints are preferably produced by means of a polyurethane adhesive (PU adhesive).

11. Sound-insulating floor element according to one of the preceding claims 1 to 10, **characterised in that** the carrier panel (1) is made of laminated wood.

## Revendications

1. Élément de plancher insonorisant destiné à des véhicules, notamment des véhicules ferroviaires, lequel comporte, sur sa face supérieure, un revêtement de sol sur lequel on peut marcher et qui est relié à une plaque-support qui est maintenue à distance par rapport à la tôle de fermeture inférieure par l'intermédiaire d'un dispositif porteur isolant vis-à-vis des bruits de structure comportant des éléments porteurs, l'intervalle formé étant en grande partie rempli de matériau isolant servant à l'isolation vis-à-vis des bruits transmis par l'air, **caractérisé en ce que** les éléments porteurs (2) eux-mêmes sont faits d'une matière qui isole vis-à-vis des bruits de structure et sont directement disposés entre la plaque-support (1) et la tôle de fermeture (3) et sont reliés à celles-ci, **en ce que** la tôle de fermeture (3) est réalisée sous forme d'éléments de surface largement plans, **en ce que** le matériau isolant (4) est fixé à la face inférieure de la plaque-support (1) entre les éléments porteurs (2) et **en ce qu'**un espace d'air (5) est formé entre la face inférieure de la couche de matériau isolant (4) et la tôle de fermeture (3).

2. Élément de plancher insonorisant selon la revendication 1, **caractérisé en ce que** les éléments porteurs (2) sont réalisés sous forme de bandes porteuses qui bordent latéralement, au moins par endroits, l'élément de plancher.

3. Élément de plancher insonorisant selon la revendication 1 ou 2, **caractérisé en ce que** les éléments porteurs ou bandes porteuses (2) sont reliés à la face inférieure de la plaque-support (1) et à la face supérieure de la tôle de fermeture (3) grâce à une liaison par collage.

4. Élément de plancher insonorisant selon l'une des revendications précédentes 1 à 3, **caractérisé en ce que** l'intervalle (5) situé entre la face inférieure de la couche de matériau isolant (4) et la tôle de fermeture (3) est assuré grâce à des écarteurs (6).

5. Élément de plancher insonorisant selon la revendication 4, **caractérisé en ce que** les écarteurs (6) sont faits de matériau élastique, notamment de caoutchouc.

6. Élément de plancher insonorisant selon l'une des revendications précédentes 1 à 5, **caractérisé en ce que** la couche de matériau isolant (4) est fixée à la face inférieure de la plaque-support (1) grâce à une liaison par collage.

7. Élément de plancher insonorisant selon l'une des revendications précédentes 1 à 6, **caractérisé en ce que** les éléments porteurs ou bandes porteuses (2) sont faits du matériau Sylomer.

8. Élément de plancher insonorisant selon l'une des revendications précédentes 1 à 7, **caractérisé en ce que** le matériau isolant (4) est fait de laine minérale.

9. Élément de plancher insonorisant selon l'une des revendications précédentes 1 à 8, **caractérisé en ce que** l'élément de plancher est relié au gros oeuvre du véhicule grâce à une liaison par collage.

10. Élément de plancher insonorisant selon l'une des revendications précédentes 1 à 9, **caractérisé en ce que** les liaisons par collage sont de préférence faites grâce à une colle polyuréthanne (colle PU).

11. Élément de plancher insonorisant selon l'une des revendications précédentes 1 à 10, **caractérisé en ce que** la plaque-support (1) est faite de bois stratifié.
